# EUROPÄISCHE PATENTANMELDUNG

(11) **EP 2 472 376 A1**
(43) Veröffentlichungstag der Anmeldung: **04.07.2012**
(21) Anmeldenummer: 11150013.8
(22) Anmeldetag: 03.01.2011
(51) Int. Cl.: G06F 3/048, G06F 3/01

(54) **Elektrisches Gerät**

(71) Anmelder: SIEMENS AKTIENGESELLSCHAFT, 80333 München (DE)
(72) Erfinder: Arndt, Jonas, 76137, Karlsruhe (DE)

(57) **Zusammenfassung**

Die Erfindung betrifft ein elektrisches Gerät (1, 2) mit einer Anzeigeeinheit (5, 6) zur Darstellung von Informationen (14, 15) in verschiedenen Vergrößerungsstufen. Es werden Maßnahmen vorgeschlagen, mittels deren eine Einstellung der Vergrößerungsstufen erleichtert wird.

## Beschreibung

Die Erfindung betrifft ein elektrisches Gerät mit einer Anzeigeeinheit zur Darstellung von Informationen in verschiedenen Vergrößerungsstufen.

Ein derartiges elektrisches Gerät ist beispielsweise in Form eines Notebooks mit einer so genannten Windows-Oberfläche und unterschiedlichen Anwenderprogrammen bekannt. Zum Beispiel ist auf diesem Notebook ein so genannter Internet-Explorer ablauffähig, wobei ein Anwender mittels einstellbaren Vergrößerungsstufen die Darstellung der Informationen im Hinblick auf die Größe eines darzustellenden Textes und/oder eines grafischen Symbols bzw. grafischen Objekts seinen Bedürfnissen anpassen kann. Nachteilig ist, dass der Anwender zunächst mittels einer Maus einen Cursor positionieren muss, um schließlich im Rahmen einer weiteren Eingabe die Vergrößerungsstufe einstellen zu können.

Der Erfindung liegt daher die Aufgabe zugrunde, ein elektrisches Gerät der eingangs genannten Art zu schaffen, welches die Einstellung der Vergrößerungsstufe vereinfacht.

Diese Aufgabe wird dadurch gelöst, dass das elektrische Gerät mit einem Sensor versehen ist, welcher den Abstand eines Betrachters von der Anzeigeeinheit erfasst, und dass das Gerät dazu ausgebildet ist, in Abhängigkeit des Abstands die Vergrößerungsstufe einzustellen.

Vorteilhaft ist, dass das Gerät automatisch die Vergrößerungsstufe der Informationsausgabe einstellt und die Darstellung auf die Entfernung eines Anwenders bzw. Benutzers von der Anzeigeeinheit anpasst. Bedienereingaben sind nicht erforderlich. Darüber hinaus ist es vorteilhaft, dass ein Operator in einer Leitwarte eines Prozessleitsystems, welche mit einer Vielzahl von Bedien- und Beobachtungsgeräten versehen ist, aus der "Ferne" die auf der jeweiligen Anzeigeeinheit der Bedien- und Beobachtungsgeräte dargestellten Informationen erkennen kann. Der Betrachter braucht sich nicht den jeweiligen Anzeigeeinheiten zu nähern, um die Information lesen zu können.

In einer Ausgestaltung der Erfindung ist vorgesehen, dass das Gerät ferner dazu ausgebildet ist, die Vergrößerungsstufe dem Abstand menügesteuert zuzuordnen. Dadurch kann ein Anwender die Vergrößerungsstufe seinen Bedürfnissen anpassen und diese konfigurieren bzw. parametrieren.

In einer weiteren Ausgestaltung der Erfindung gemäß den im Anspruch 3 angegebenen Maßnahmen werden zusätzlich in Abhängigkeit von Relevanzstufen die Informationen gefiltert angezeigt.

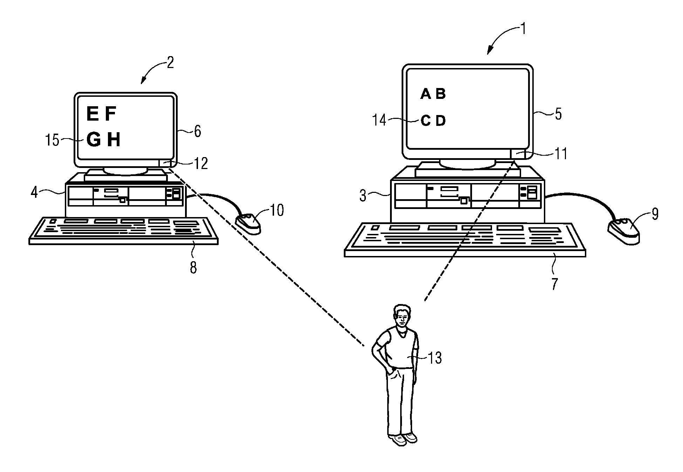

Die Erfindung wird nachfolgend anhand eines Ausführungsbeispiels unter Bezugnahme auf die einzige Figur der Zeichnung näher erläutert. Die Figur der Zeichnung zeigt in schematischer Darstellung Bedien- und Beobachtungsgeräte eines Prozessleitsystems.

In der Figur sind mit 1, 2 Bedien- und Beobachtungsgeräte bezeichnet, welche im Wesentlichen identische Hard- und Softwarekomponenten aufweisen. Die Bedien- und Beobachtungsgeräte 1, 2 umfassen jeweils eine Rechnereinheit 3, 4, eine Anzeigeeinheit 5, 6 und Eingabemittel in Form einer Tastatur 7, 8 und einer Maus 9, 10. Die Anzeigeeinheiten 5, 6 sind jeweils mit einem Sensor 11, 12 versehen, wobei der Sensor 11 den Abstand eines Benutzers 13 von der Anzeigeeinheit 5 und der Sensor 12 den Abstand der Anzeigeeinheit 6 von dem Benutzer 13 erfasst, was in der Zeichnung mittels unterbrochenen Linien angedeutet ist. Die Sensoren 11, 12 erzeugen jeweils ein dem Abstand entsprechendes Abstandssignal, welches der jeweiligen Rechnereinheit 3, 4 übermittelt wird, wobei die Rechnereinheiten 3, 4 die Abstandssignale auswerten und auf den Anzeigeeinheiten 5, 6 gemäß dem jeweiligen Auswerteergebnis die darzustellenden Informationen in einer abstandsspezifischen Vergrößerungsstufe anzeigen.

In welcher Vergrößerungsstufe die Informationen angezeigt werden, gibt der Benutzer 13 bzw. ein Anwender im Rahmen eines auf den Rechnern ablauffähigen Konfigurations- und Parametrierprogramms vor. Beispielsweise trägt der Anwender für jedes Bedien- und Beobachtungsgerät in eine Tabelle, die nach dem Start des Konfigurations- und Parametrierprogramms angezeigt wird, Abstände oder Abstandsbereiche und zu diesen Abständen oder Abstandsbereichen jeweils eine Vergrößerungsstufe ein, wobei die Zuordnungen selbstverständlich so gewählt werden, dass mit zunehmendem Abstand die Informationen auf der Anzeigeeinheit größer dargestellt und von dem Anwender aus diesen Abständen bzw. Entfernungen noch gelesen werden können.

Für den Fall, dass z. B. der Sensor 11 einen Abstand erfasst, welcher einem in der Tabelle hinterlegten Abstand entspricht oder der innerhalb eines hinterlegten Abstandsbereiches liegt, stellt der Rechner mittels eines geeigneten Treiberbausteins die diesem Abstand bzw. Abstandsbereich zugeordnete Vergrößerungsstufe ein, die der Treiberbaustein aus der Tabelle ausliest.

Im vorliegenden Ausführungsbeispiel ist der Abstand zwischen dem Benutzer 13 und der Anzeigeeinheit 5 des Bedien- und Beobachtungsgerätes 1 geringer als der Abstand zwischen dem Benutzer 13 und der Anzeigeeinheit 6 des Bedien- und Beobachtungsgerätes 2, wodurch der Rechner 3 Informationen 14 auf der Anzeigeeinheit 5 kleiner darstellt als der Rechner 4 die Informationen 15 auf der Anzeigeeinheit 6 des Bedien- und Beobachtungsgerätes 2. Die Vergrößerungsstufen sind selbstverständlich so gewählt, dass der Benutzer 13 sowohl die Informationen 14 als auch die Informationen 15 trotz der Abstände bzw. Entfernungen noch gut erkennen bzw. lesen kann. Der Benutzer braucht sich nicht den jeweiligen Anzeigeeinheiten 5, 6 zu nähern, um die Informationen 14, 15 lesen zu können.

Es kann nun vorkommen, dass auf der Anzeigeeinheit 6 aufgrund der vorgegebenen Vergrößerungsstufe nicht alle relevanten Informationen gleichzeitig angezeigt werden können. In diesem Fall werden die Informationen entsprechend einer vorgegebenen Relevanzstufe dargestellt, wobei der Anwender ebenfalls menügesteuert den darzustellenden Informationen Relevanzstufen zuordnet. Mit anderen Worten: In Abhängigkeit des Abstandes des Benutzers von der Anzeigeeinheit wird die Vergrößerungsstufe eingestellt und zusätzlich in Abhängigkeit der Relevanzstufe werden die Informationen gefiltert angezeigt. Dazu ist ferner vorgesehen, dass die Informationen entsprechend ihren zugeordneten Relevanzstufen zyklisch angezeigt werden, beispielsweise in der Art und Weise, dass zunächst die mit der höchsten Relevanzstufe versehene Information als Erstes und die mit der niedrigsten Relevanzstufe versehene Information als Letztes angezeigt wird, wobei nach der Darstellung der mit der niedrigsten Relevanzstufe versehenen Information wiederum die mit der höchsten Relevanzstufe versehene Information dargestellt wird.

## Patentansprüche

1. Elektrisches Gerät mit einer Anzeigeeinheit (5, 6) zur Darstellung von Informationen (14, 15) in verschiedenen Vergrößerungsstufen, **dadurch gekennzeichnet, dass** das elektrische Gerät (1, 2) mit einem Sensor (11, 12) versehen ist, welcher den Abstand eines Benutzers (13) von der Anzeigeeinheit (5, 6) erfasst, und dass das Gerät (1, 2) dazu ausgebildet ist, in Abhängigkeit des Abstands die Vergrößerungsstufe einzustellen.

2. Elektrisches Gerät nach Anspruch 1, **dadurch gekennzeichnet, dass** das Gerät (1, 2) ferner dazu ausgebildet ist, die Vergrößerungsstufe dem Abstand menügesteuert zuzuordnen.

3. Elektrisches Gerät nach Anspruch 1 oder 2, **dadurch gekennzeichnet, dass** das Gerät (1, 2) ferner dazu ausgebildet ist, in Abhängigkeit von den Informationen zugeordneten Relevanzstufen die Informationen gefiltert anzuzeigen.

4. Anordnung mit mehreren elektrischen Geräten (1, 2) nach einem der Ansprüche 1 bis 3.
